# EUROPÄISCHE PATENTSCHRIFT

(11) **EP 0 899 161 B1**
(45) Veröffentlichungstag und Bekanntmachung des Hinweises auf die Patenterteilung: **10.12.2003**
(21) Anmeldenummer: 98116064.1
(22) Anmeldetag: 26.08.1998
(51) Int. Cl.: B60R 11/02, B60R 16/02

(54) **Kommunikationsanlage für ein Kraftfahrzeug**
Communication system for a vehicle
Système de communication pour véhicule

(30) Priorität: 28.08.1997 DE 19737325
(43) Veröffentlichungstag der Anmeldung: 03.03.1999
(73) Patentinhaber: Grundig Car InterMedia System GmbH, 90471 Nürnberg (DE)
(72) Erfinder: Hallas, Ernst, Dr., 90762 Fürth (DE)

(56) Entgegenhaltungen:
- EP-A- 0 487 503
- EP-A- 0 515 042
- EP-A- 0 556 468
- EP-A- 0 755 829
- EP-A- 0 813 997
- DE-A- 19 526 542
- DE-C- 3 637 960

## Beschreibung

Die Erfindung betrifft eine Kommunikationsanlage für ein Kraftfahrzeug mit einer Mehrzahl von Komponenten, die an verschiedenen Stellen des Kraftfahrzeugs positioniert sind.

Es ist bereits bekannt, in einem Kraftfahrzeug ein Autoradio und einen CD-Wechsler zu betreiben, wobei das Autoradio in eine Autoradio-Einbauöffnung im Armaturenbrett des Kraftfahrzeugs eingesetzt und der CD-Wechsler im Kofferraum des Kraftfahrzeugs angeordnet ist. Dadurch wird dem Umstand Rechnung getragen, daß das Armaturenbrett aus Platzgründen außer dem Autoradio keine weiteren zur Anlage gehörenden Komponenten aufnehmen kann, so daß diese an anderer Stelle im Fahrzeug positioniert werden müssen. Die notwendige Übertragung von Steuersignalen vom Autoradio zum CD-Wechsler und von Audiodaten vom CD-Wechsler zum Autoradio erfolgt unter Verwendung eines Verbindungskabels, welches zu einer bidirektionalen Signalübertragung vorgesehen ist. Zur Steuerung der bekannten Anlage ist ein im Autoradio angeordneter Mikrocomputer vorgesehen, welchem über die Bedieneinheit des Autoradios eingegebene Bedienbefehle zugeführt werden.

Es ist weiterhin bekannt, in einem Kraftfahrzeug eine Navigationsanlage vorzusehen. Mittels dieser kann zum einen der momentane Standort des Fahrzeugs bestimmt und zum anderen dem Fahrer ein Hinweis bezüglich seiner Fahrstrecke gegeben werden. Die Navigationsanlage kann mit digitalisiertem Kartenmaterial, welches auf einer Speicherplatte abgespeichert ist, sowie mit einem GPS-Empfänger (global positioning system) arbeiten. Die Angabe der Hinweise bezüglich der Fahrstrecke kann optisch auf einem Display oder akustisch über die Auto-Lautsprecher erfolgen.

Ferner ist es bereits bekannt, in einem Kraftfahrzeug einen Bildschirm zur Wiedergabe von Fernsehsignalen vorzusehen.

Aus der DE-C1-36 37 960 ist eine Kommunikationsanlage gemäß dem Oberbegriff von Anspruch 1 Diese enthält zusätzlich eine Sicherungseinrichtung für ein in das Fahrzeug eingebautes Zusatzgerät, insbesondere für ein Radio- oder Kassettengerät. Zu diesem Zweck ist ein Steuergerät vorgesehen, welches über eine bidirektionale Datenleitung mit einer Diebstahl-Sicherungseinheit des Zusatzgerätes verbunden ist. Nach einem Aktivieren der Fahrzeugdiebstahlwarnanlage mittels eines von der Außenseite des Fahrzeugs betätigbaren Schalters wird vom Steuergerät mittels eines Zufallsgenerators eine Datenfolge als Diebstahlcode erzeugt und an die Diebstahl-Sicherungseinheit des Zusatzgerätes abgegeben, wo sie in einem Speicher abgespeichert wird. Weiterhin wird das Zusatzgerät von der Diebstahl-Sicherungseinheit außer Betrieb gesetzt. Beim Deaktivieren der Fahrzeug-diebstahlwarnanlage wird vom Steuergerät eine mit der genannten Datenfolge übereinstimmende Datenfolge abgegeben. Ergibt ein Vergleich mit der im Speicher des Zusatzgerätes abgespeicherten Datenfolge, daß beide Datenfolgen übereinstimmen, dann wird die Funktion des Zusatzgerätes wieder freigegeben. Bei fehlender Übereinstimmung bleibt die Funktion des Zusatzgerätes gesperrt.

Aus dem nicht vorveröffentlichen Dokument EP 0 813 997 A2 ist ein Verfahren zum Diebstahlschutz elektronischer Geräte eines Fahrzeugs bekannt. Gemäß dem Verfahren wird mit einem Speicher im Gerät und einer darin enthaltenen Soll-Kennung eine in das Gerät eingebbare Ist-Kennung verglichen. Bei Übereinstimmung der beiden Kennungen ist das Gerät aktivierbar. Bei einem Gerät, das an einem fahrzeugintemen Datenbus mit mehreren über individuelle Adressen erreichbaren Teilnehmern angeschlossen ist, wird als Soll-Kennung eine auf den Datenbus übertragene Adresse eines Teilnehmers als Soll-Kennung abgespeichert und bei jeder anschließenden Inbetriebnahme des Geräts wird diese Soll-Kennung mit den auf den Datenbus übertragenen Adressen der Teilnehmer verglichen.

Schließlich sind auch schon Heim-Audioanlagen bekannt, bei denen zum Zwecke einer Einsparung von Verbindungskabeln die Signale zwischen den einzelnen Komponenten optisch übertragen werden.

Der Erfindung liegt die Aufgabe zugrunde, eine Kommunikationsanlage für ein Kraftfahrzeug mit einer Mehrzahl von Komponenten so aufzubauen, daß ein Anreiz für einen Diebstahl einer oder mehrerer der Komponenten der Kommunikationsanlage verringert ist.

Diese Aufgabe wird bei einer Kommunikationsanlage mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Ansprüchen.

Die Vorteile der Erfindung bestehen insbesondere darin, daß ausschließlich Geräte, in deren Speicher ein für die jeweilige Kommunikationsanlage charakteristisches Anlagencodesignal gespeichert ist, an der Anlage in Betrieb genommen werden können. Beispielsweise ist es nicht möglich, ein aus einer anderen Anlage entwendetes Gerät, in dessen Speicher ein für die andere Kommunikationsanlage charakteristisches anderes Anlagencodesignal gespeichert ist, an der Anlage in Betrieb zu nehmen.

Mittels der im Anspruch 2 angegebenen Merkmale wird erreicht, daß neu im Fachhandel erworbene Geräte an der Anlage betrieben werden können. Diese über den Fachhandel vertriebenen Geräte werden ohne abgespeichertes Anlagencodesignal verkauft. Wird ein derartiges Gerät in die Anlage eingesetzt, dann erkennt der zur Anlagensteuerung vorgesehene Mikrocomputer der Anlage, daß ein neues Gerät an die Anlage angeschlossen werden soll, leitet eine Abspeicherung des Anlagencodesignals der vorhandenen Anlage im Speicher des neuen Gerätes in die Wege und gibt dann den Betrieb dieses Gerätes an der Anlage frei.

Die Vorteile einer Kommunikationsanlage mit den im Anspruch 3 angegebenen Merkmalen bestehen darin, daß bereits beim Versuch, eine anlagenfremde Komponente in der Anlage in Betrieb zu nehmen, ein Alarmsignal ausgegeben wird, welches die Aufmerksamkeit der Öffentlichkeit hervorruft.

Bei Verwendung einer Kommunikationsanlage mit den im Anspruch 4 angegebenen Merkmalen wird nicht nur eine eventuelle anlagenfremde Komponente nicht in Betrieb genommen, sondern es erfolgt darüber hinaus eine Deaktivierung weiterer Komponenten der Anlage. Dadurch wird der Anreiz, aus fremden Anlagen entwendete Komponenten in der eigenen Anlage zu verwenden, weiter verringert.

Die mittels der Merkmale des Anspruchs 5 erzielten Vorteile bestehen darin, daß der Benutzer bei jeder Inbetriebnahme der Anlage automatisch dann eine Meldung erhält, wenn eine Gerätekomponente völlig fehlt oder defekt ist. Gegebenenfalls kann dem Benutzer auch optisch oder akustisch signalisiert werden, welche der Komponenten nicht funktionsfähig ist.

Durch die im Anspruch 6 angegebenen Merkmale wird erreicht, daß der Besitzer der Anlage Reparaturarbeiten an der Anlage, einen Austausch von Gerätekomponenten oder auch eine Entfernung von Komponenten durchführen kann, ohne daß ein Alarmsignal erzeugt und ohne daß eine Störung des weiteren Anlagenbetriebes initiiert wird.

Die Vorteile der im Anspruch 7 angegebenen Merkmale bestehen darin, daß eine Inbetriebnahme von Komponenten an der Anlage und ein Austausch von Komponenten schnell und einfach erfolgen kann. Die jeweilige neue oder reparierte Komponente muß lediglich über eine bereits fahrzeugseitig vorhandene Steckverbindung an den ebenfalls bereits fahrzeugseitig vorbereiteten optischen Bus angeschlossen werden.

Mittels der im Anspruch 8 angegebenen Merkmale wird der Vorteil erreicht, daß im Falle eines Diebstahls einer Komponente aus der Anlage sofort über eine Telefonverbindung eine vorgegebene Notrufnummer angewählt wird, beispielsweise die der Polizei. Ist das Fahrzeug weiterhin mit einem GPS-Empfangssystem ausgerüstet, dann kann die Polizei schnell zum Ort des Diebstahls kommen und die Verfolgung der Diebe aufnehmen. Auf,diese Weise ist insbesondere ein Schutz hochwertiger Geräte möglich.

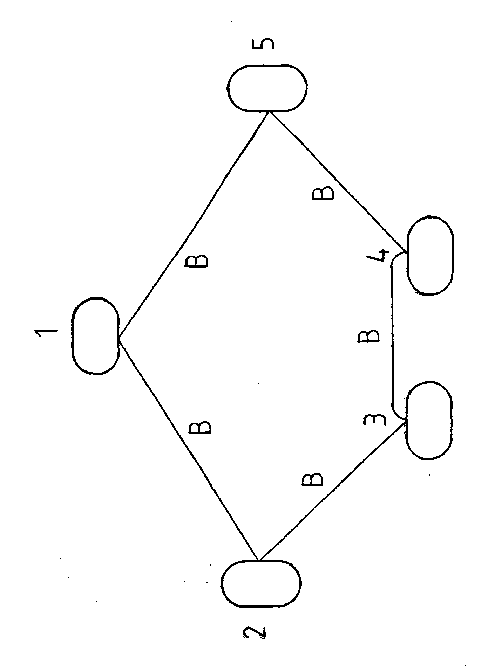

Weitere vorteilhafte Eigenschaften der Erfindung ergeben sich aus der Erläuterung eines Ausführungsbeispiels anhand der Figur.

Diese zeigt eine Kommunikationsanlage für ein Kraftfahrzeug mit einem Benutzermodul 1, einem Bildschirm 2, einem Verstärker 3, einer Daten-Wiedergabebox 4 und einem Mehrkomponentenmodul 5. Diese Anlagenkomponenten sind über einen optischen Bus B miteinander verbunden. Zu diesem Zweck weist jede dieser Anlagenkomponenten eine nicht gezeichnete optische Sende- und Empfangseinheit auf, über welche die von einem oder mehreren der Nachbarmodule optisch ausgesendeten Signale empfangen und über welche zu einem oder mehreren der Nachbarmodule optische Signale übertragbar sind. Alternativ dazu kann jede dieser Anlagenkomponenten über eine bereits fahrzeugseitig vorhandene Steckverbindung mit einer optischen Sende- und Empfangseinheit verbunden sein, wobei diese letztere bereits bei der Herstellung des Fahrzeugs installiert wurde.

Das Benutzermodul 1 weist eine Bedientastatur zur Eingabe von Bedienbefehlen, eine Anzeigeeinheit in Form eines LCD-Displays und einen Mikrocomputer auf, welcher zur Steuerung der Kommunikationsanlage, insbesondere des optischen Busses B, vorgesehen ist. Weiterhin weist das Benutzermodul 1 einen Eingabeschlitz für einen plattenförmigen Datenträger auf, beispielsweise eine CD. Das Benutzermodul ist in einen üblicherweise für ein Autoradio vorgesehenen Einbauraum im Armaturenbrett des Kraftfahrzeugs eingebracht. Dies hat den Vorteil, daß der Fahrer des Fahrzeugs während der Fahrt die Anlage bedienen und auf dem LCD-Display angezeigte Informationen ablesen kann.

Alle anderen Komponenten der Anlage sind nicht im Armaturenbrett des Fahrzeugs angeordnet, sondern über das gesamte Kraftfahrzeug und dessen Kofferraum verteilt, so daß für jede dieser Komponenten ein für die Komponente optimaler Platz gefunden werden kann. Beispielsweise befindet sich der Bildschirm 2 zwischen dem Fahrer- und dem Beifahrersitz, so daß er nur für die im Fahrzeugfond sitzenden Passagiere einsehbar ist. Für den Verstärker 3, bei dem es sich um eine wärmeerzeugende Komponente handelt, kann ein Platz gewählt werden, der eine gute Wärmeableitung gewährleistet.

Die Daten-Wiedergabebox 4 enthält einen CD-Wechsler, ein CD-ROM-Laufwerk und ein DVD-Abspielgerät, welches zum Abspielen von digitalen Videoplatten vorgesehen ist. Diese Daten-Wiedergabebox 4 ist vorzugsweise im Kofferraum des Fahrzeugs angeordnet, so daß sie von außen nicht ohne weiteres sichtbar ist und da eine derartige Datenwiedergabebox vergleichsweise viel Platz benötigt, der im Passagierraum des Fahrzeugs nicht ohne weiteres zur Verfügung steht.

Das Mehrkomponentenmodul 5 weist einen FM/AM-Tuner, ein Navigationsgerät, einen Signalverarbeitungsbaustein, einen DAB-Tuner, einen Fernsehtuner, eine Set-Top-Box und einen Telefonbaustein auf, wobei diese Geräte - soweit notwendig - mit einer jeweils zugehörigen Antenne verbunden sind.

Die einzelnen Komponenten der Anlage können jeweils einen eigenen Mikrocomputer zur Gerätesteuerung aufweisen, der mit dem zur Busverwaltung vorgesehenen Mikrocomputer, der im Benutzermodul 1 vorgesehen ist, zusammenarbeitet.

Jede der genannten Komponenten der Anlage weist einen Speicher auf, in welchem ein Speicherplatz zur Abspeicherung eines für die Kommunikationsanlage charakteristischen Anlagencodesignals vorgesehen ist. Dieses Anlagencodesignal kann in Form eines 8-Bit-Wortes im genannten Speicher abgespeichert sein. Die Abspeicherung dieses Anlagencodesignals erfolgt vorzugsweise bei der ersten Inbetriebnahme der Anlage durch den Benutzer unter Verwendung der Bedientastatur des Benutzermoduls 1. Bei dieser ersten Inbetriebnahme registriert der Mikrocomputer des Benutzermoduls 1 weiterhin die Anzahl, die Art und die Position der an die Anlage angeschlossenen Komponenten und legt diesbezügliche Informationen in einem nichtflüchtigen Speicher des Benutzermoduls ab. Dadurch ist der Mikrocomputer ständig über den Ist-Zustand der Anlage informiert und kann die Steuerung des optischen Busses B vornehmen, über welchen sowohl die jeweiligen Steuerbefehle als auch die Datensignale (Audiosignale, Videosignale) übertragen werden. Die genannten Informationen bleiben auch nach einem Ausschalten der Anlage im nichtflüchtigen Speicher des Benutzermoduls erhalten, so daß sie dem Mikrocomputer auch beim nächsten Einschalten der Anlage zur Verfügung stehen.

Im Falle eines derartigen Wiedereinschaltens der Anlage überprüft der Mikrocomputer zum einen, ob im Speicher jeder der an die Anlage angeschlossenen Komponenten das Anlagencodesignal abgespeichert ist oder nicht. Erkennt der Mikrocomputer, daß dieses Anlagencodesignal im Speicher einer Komponente vorhanden ist, dann gibt er den Betrieb dieser Komponente frei. Ist im Speicher dieser Komponente hingegen noch keinerlei Anlagencodesignal vorhanden, dann erkennt der Mikrocomputer, daß es sich bei dieser Komponente um eine neu gekaufte Komponente handelt und initiiert eine Abspeicherung des die Kommunikationsanlage individuell charakterisierenden Anlagencodesignals im Speicher dieser Komponente. Erkennt der Mikrocomputer, daß im Speicher der Komponente ein anlagenfremdes Anlagencodesignal abgespeichert ist, dann schaltet er eine oder mehrere weitere Komponenten der Anlage funktionslos, beispielsweise alle Signalquellen. Alternativ oder zusätzlich dazu steuert er die Lautsprecher der Anlage zur Ausgabe eines Alarmsignals an. Dies bedeutet mit anderen Worten, daß bei einem Versuch, eine aus einem Fahrzeug gestohlene Komponente in einer anderen Anlage in Betrieb zu nehmen, die andere Anlage außer Betrieb gesetzt und gegebenenfalls zusätzlich ein Alarmsignal ausgegeben wird. Ist diese Eigenschaft der Anlage beim breiten Publikum bekannt und wird sie beispielsweise mittels eines Aufklebers an der Fahrzeugseitenscheibe signalisiert, dann ist der Anreiz für einen Autoaufbruch und einen Diebstahl einer oder mehrerer Komponenten der Anlage wesentlich reduziert, da die gestohlenen Komponenten in einer anderen Anlage nicht ohne weiteres in Betrieb genommen werden können. Eine Abhilfe ist lediglich in einer Fachwerkstatt möglich, in der unter Verwendung geeigneter Arbeitsmittel das Anlagencodesignal im Speicher der Komponente gelöscht werden kann, so daß beim nachfolgenden Wiedereinbau der Komponente in eine Anlage die Komponente vom Mikrocomputer als eine neu gekaufte Komponente identifiziert wird.

Weiterhin überprüft der Mikrocomputer bei einem Wiedereinschalten der Anlage, ob der beim vorhergehenden Ausschalten der Anlage bestehende Istzustand weiterhin gegeben ist oder nicht, d. h. er überprüft, ob die Anzahl, die Art und die Position der an die Anlage angeschlossenen Komponenten unverändert ist oder nicht. Besteht dieser vorhergehende Istzustand weiterhin, dann gibt der Mikrocomputer den Betrieb der Anlage frei. Erkennt der Mikrocomputer hingegen, daß eine der Komponenten der Anlage fehlt oder ausgetauscht wurde, dann schaltet er weitere Komponenten der Anlage funktionslos und/oder leitet die Ausgabe eines Alarmsignals über die Lautsprecher in die Wege, um den Benutzer über die Veränderung des Istzustandes zu informieren. Gegebenenfalls kann ein derartiges Alarmsignal auch erzeugt werden, um den Benutzer über einen Defekt an einer der Komponenten zu informieren.

Um es den Benutzer bei einem Defekt einer Komponente zu ermöglichen, diese Komponente aus dem Kraftfahrzeug auszubauen und zur Reparatur in die Fachwerkstatt zu bringen, ist mittels der Bedieneinheit der Anlage eine Codezahl eingebbar, die mit dem Anlagencodesignal übereinstimmen kann. Nach einer Eingabe dieser Codezahl unterdrückt der Mikrocomputer die Ausgabe eines Alarmsignals bzw. das Funktionslosschalten weiterer Komponenten der Anlage.

Um einen einfachen und schnellen Ein- und Ausbau der Komponenten zu ermöglichen, sind im Fahrzeug bereits ab Werk Steckverbindungen zur Aufnahme dieser Komponenten vorgesehen. Diese Steckverbindungen können - wie bereits oben beschrieben - mit optischen Sende- und Empfangseinheiten verbunden sein, die ebenfalls bereits bei der Fahrzeugherstellung eingebaut werden und die notwendige optische Signalübertragung zwischen den Komponenten sicherstellen.

Gemäß einer vorteilhaften Weiterbildung der Erfindung gehört der beschriebenen Kommunikationsanlage weiterhin ein Autotelefon, bzw. ein in den optischen Bus integrierbares Mobiltelefon oder dessen Anschlußvorrichtung an den optischen Bus, und ein GPS-Empfangsgerät an. Im Falle eines Diebstahls einer Komponente kann dann unter Verwendung einer vorprogrammierten Telefonnummer ein automatischer Wählvorgang in die Wege geleitet werden, um einer Notrufstelle, beispielsweise der Polizei, eine Information über den Diebstahl selbst und dessen Ort zukommen zu lassen.

Weiterhin kann das beschriebene Bussystem B eine Schnittstelle zu einem oder mehreren weiteren Bussystemen des Fahrzeugs aufweisen. Ein derartiges weiteres Bussystem ist beispielsweise ein für die Fahrzeugelektronik vorgesehenes, kupferverdrahtetes Bussystem. Beim Vorliegen einer derartigen Schnittstelle können zwischen verschiedenen Bussystemen Informationen ausgetauscht werden. Beispielsweise kann der Benutzer unter Verwendung eines Displays oder eines Lautsprechers der Kommunikationsanlage über in der Fahrzeugelektronik auftretende Probleme informiert werden, beispielsweise über eine Überhitzung, einen Defekt, die Notwendigkeit eines Werkstattsbesuchs, usw.

## Patentansprüche

1. Kommunikationsanlage für ein Kraftfahrzeug mit einer Mehrzahl von Komponenten, die an verschiedenen Stellen des Kraftfahrzeugs positioniert sind, wobei die einzelnen Komponenten der Kommunikationsanlage über einen Bus miteinander verbunden sind und wobei zur Busverwaltung ein Mikrocomputer vorgesehen ist,
**dadurch gekennzeichnet, dass**
- die komponenten über einen optischen Bus miteinander verbunden sind,
- jede der Komponenten der Kommunikationsanlage mit einem Speicher für ein die Kommunikationsanlage individuell charakterisierendes Anlagencodesignal versehen ist, und
- der Mikrocomputer vor der Aktivierung einer Komponente überprüft, ob im Speicher dieser Komponente das Anlagencodesignal abgespeichert ist oder nicht und den Betrieb dieser Komponente nur dann freigibt, wenn im Speicher der Komponente das Anlagencodesignal abgespeichert ist.

2. Kommunikationsanlage nach Anspruch 1,
**dadurch gekennzeichnet, daß**
der Mikrocomputer beim völligen Fehlen eines Anlagencodesignals im Speicher einer Komponente eine Abspeicherung des die Kommunikationsanlage individuell charakterisierenden Anlagencodesignals initiiert.

3. Kommunikationsanlage nach Anspruch 1 oder 2,
**dadurch gekennzeichnet, daß**
der Mikrocomputer beim Erkennen eines anlagenfremden Anlagencodesignals im Speicher einer Komponente die Ausgabe eines Alarmsignals initiiert.

4. Kommunikationsanlage nach einem oder mehreren der vorhergehenden Ansprüche,
**dadurch gekennzeichnet, daß**
der Mikrocomputer beim Erkennen eines anlagenfremden Anlagencodesignals im Speicher einer Komponente weitere Komponenten der Kommunikationsanlage funktionslos schaltet.

5. Kommunikationsanlage nach einem oder mehreren der vorhergehenden Ansprüche,
**dadurch gekennzeichnet, daß**
der Mikrocomputer einen nichtflüchtigen Speicher aufweist, in welchem Daten abspeicherbar sind, die der Anzahl und Art der jeweils angeschlossenen Komponenten entsprechen, daß der Mikrocomputer bei jeder Inbetriebnahme der Kommunikationsanlage die Anzahl und Art der jeweils angeschlossenen Komponenten erfaßt und beim Erkennen des Fehlens oder eines Austauschs einer oder mehrerer Komponenten die Ausgabe eines Alarmsignals initiiert oder weitere Komponenten der Kommunikationsanlage funktionslos schaltet.

6. Kommunikationsanlage nach Anspruch 5,
**dadurch gekennzeichnet, daß**
mittels der Bedieneinheit der Kommunikationsanlage eine Codezahl eingebbar ist und der Mikrocomputer beim Erkennen dieser Codezahl die Ausgabe des Alarmsignals sowie ein Funktionslosschalten weiterer Komponenten der Kommunikationsanlage unterdrückt.

7. Kommunikationsanlage nach einem oder mehreren der vorhergehenden Ansprüche,
**dadurch gekennzeichnet, daß**
die Bauteile des optischen Busses sowie Steckverbindungen für die einzelnen Komponenten der Kommunikationsanlage vom Kraftfahrzeughersteller werksseitig im Kraftfahrzeug angebracht sind.

8. Kommunikationsanlage nach einem oder mehreren der Ansprüche 3-7,
**dadurch gekennzeichnet, daß**
sie ein Autotelefon oder ein in den optischen Bus integrierbares Mobiltelefon aufweist und bei einem Diebstahl einer Komponente Alarmsignale über eine Telefonverbindung übertragbar sind.

9. Kommunikationsanlage nach einem oder mehreren der vorhergehenden Ansprüche,
**dadurch gekennzeichnet, daß**
sie über eine Schnittstelle mit einem weiteren Bussystem verbunden ist und über diese Schnittstelle ein Datenaustausch erfolgt.

10. Kommunikationsanlage nach Anspruch 9,
**dadurch gekennzeichnet, daß**
ein Display oder ein Lautsprecher der Kommunikationsanlage zur Wiedergabe von Signalen vorgesehen ist, die aus Daten abgeleitet sind, die über die Schnittstelle übertragen werden.

11. Kommunikationsanlage nach einem oder mehreren der vorhergehenden Ansprüche,
**dadurch gekennzeichnet, daß**
die einzelnen Komponenten der Kommunikationsanlage über den optischen Bus ringförmig miteinander verbunden sind.

## Claims

1. Communications system for a motor vehicle comprising a plurality of components that are positioned at various points in the motor vehicle, wherein the individual components of the communications system are connected together via a bus and wherein a microcomputer is provided for the bus management, **characterized in that**
- the components are connected together via an optical bus,
- each of the components of the communications system are provided with a memory for a system code signal individually characterizing the communications system, and
- before activating a component, the microcomputer checks whether the system code signal is stored in the memory of said component or not and only enables the operation of said component if the system code signal is stored in the memory of the component.

2. Communications system according to Claim 1, **characterized in that**, if a system code signal is completely absent in the memory of a component, the microcomputer initiates storage of the system code signal individually characterizing the communications system.

3. Communications system according to Claim 1 or 2, **characterized in that**, on recognizing a system code signal foreign to the system in the memory of a component, the microcomputer initiates the emission of an alarm signal.

4. Communications system according to one or more of the preceding claims, **characterized in that**, on recognizing a system code signal foreign to the system in the memory of a component, the microcomputer renders further components of the communications system inoperative.

5. Communications system according to one or more of the preceding claims, **characterized in that** the microcomputer has a nonvolatile memory in which data can be stored that correspond to the number and type of the respective connected components, and **in that**, every time the communications system is put into operation, the microcomputer detects the number and type of the respective connected components and, if the absence or a replacement of one or more components is recognized, it initiates the emission of an alarm signal or renders further components of the communications system inoperative.

6. Communications system according to Claim 5, **characterized in that** a code number can be inputted by means of the operating unit of the communications system and, on recognizing said code number, the microcomputer suppresses the emission of the alarm signal and also a rendering of further components of the communications system inoperative.

7. Communications system according to one or more of the preceding claims, **characterized in that** the components of the optical bus and also plug connections for the individual components of the communications system are provided in the motor vehicle ex-works by the motor vehicle producer.

8. Communications system according to one or more of Claims 3-7, **characterized in that** it has a car telephone or a mobile telephone that can be incorporated in the optical bus and, in the event of theft of a component, alarm signals can be transmitted via a telephone connection.

9. Communications system according to one or more of the preceding claims **characterized in that** it is connected via an interface to a further bus system and data exchange takes place via said interface.

10. Communications system according to Claim 9, **characterized in that** a display or a loudspeaker of the communications system is provided for reproducing signals that are derived from data that are transmitted via the interface.

11. Communications system according to one or more of the preceding claims, **characterized in that** the individual components of the communications system are connected together in ring form via the optical bus.

## Revendications

1. Installation de communication pour un véhicule automobile comportant une multiplicité de composants, qui sont positionnés en différents emplacements du véhicule automobile, les différents composants de l'installation de communication étant reliés entre eux par l'intermédiaire d'un bus, et un micro-ordinateur étant prévu pour la gestion du bus, **caractérisée en ce que**
- les composants sont reliés entre eux par l'intermédiaire d'un bus optique,
- chacun des composants de l'installation de communication est équipé d'une mémoire pour un signal de code de l'installation caractérisant de façon individuelle l'installation de communication, et
- vérifier avant l'activation d'un composant si le signal de code de l'installation est mémorisé ou non dans la mémoire de ces composants et libère le fonctionnement de ces composants uniquement lorsque le signal de code de l'installation est mémorisé dans la mémoire des composants.

2. Installation de communication selon la revendication 1, **caractérisée en ce que** dans le cas de l'absence complète d'un signal de code de l'installation dans la mémoire d'un composant, le micro-ordinateur déclenche une mémorisation du signal de code de l'installation caractérisant individuellement l'installation de communication.

3. Installation de communication selon la revendication 1 ou 2, **caractérisée en ce que** lors de l'identification d'un signal de code de l'installation étranger à l'installation dans la mémoire d'un composant, le micro-ordinateur déclenche la délivrance d'un signal d'alarme.

4. Installation de communication selon une ou plusieurs des revendications précédentes, **caractérisée en ce que** lors de l'identification d'un signal de code de l'installation étranger à l'installation dans la mémoire d'un composant, le micro-ordinateur rend inactifs d'autres composants de l'installation de communication.

5. Installation de communication selon une ou plusieurs des revendications précédentes, **caractérisée en ce que** le micro-ordinateur possède une mémoire non volatile, dans laquelle peuvent être mémorisées des données, qui correspondent au nombre et au type des composants respectivement raccordés, que lors de chaque mise en service de l'installation de communication, le micro-ordinateur détecte le nombre et le type des composants respectivement raccordés et, dans le cas de l'identification de l'absence ou d'un remplacement d'un ou de plusieurs composants, le micro-ordinateur déclenche la délivrance d'un signal d'alarme ou rend inactifs d'autres composants de l'installation de communication.

6. Installation de communication selon la revendication 5, **caractérisée en ce qu'**un numéro de code peut être introduit à l'aide de l'unité de commande de l'installation de communication et que lors de l'identification de ce numéro de code, le micro-ordinateur supprime la délivrance du signal d'alarme ainsi qu'une inactivation d'autres composants de l'installation de communication.

7. Installation de communication selon une ou plusieurs des revendications précédentes, **caractérisée en ce que** les composants du bus optique ainsi que des connecteurs pour les composants individuels de l'installation de communication sont montés en usine, par le fabricant d'automobiles, dans le véhicule automobile.

8. Installation de communication selon une ou plusieurs des revendications 3 à 7, **caractérisé en ce qu'**il comporte un téléphone d'automobile ou un téléphone mobile pouvant être intégré dans le bus optique et que dans le cas du vol d'un composant, des signaux d'alarme peuvent être transmis par l'intermédiaire d'une liaison téléphonique.

9. Installation de communication selon une ou plusieurs des revendications précédentes, **caractérisée en ce qu'**elle est reliée au moyen d'une interface à un autre système de bus et qu'un échange de données s'effectue au moyen de cette interface.

10. Installation de communication selon la revendication 9, **caractérisée en ce qu'**il est prévu un dispositif d'affichage ou un haut-parleur de l'installation de communication pour la reproduction de signaux, qui sont dérivés de données qui sont transmises au moyen de l'interface.

11. Installation de communication selon une ou plusieurs des revendications précédentes, **caractérisée en ce que** les différents composants de l'installation de communication sont reliés entre eux selon une disposition annulaire par l'intermédiaire du bus optique.
